# EUROPEAN PATENT APPLICATION

(11) **EP 1 965 296 A1**
(43) Date of publication of application: **03.09.2008**
(21) Application number: 07103255.1
(22) Date of filing: 28.02.2007
(51) Int. Cl.: G06F 3/06

(54) **System and method for managing media for a portable media device**

(71) Applicant: Research In Motion Limited, Waterloo, Ontario N2L 3W8 (CA)
(72) Inventor: Lee, Matthew R., Belleville, Ontario K8N4Z6 (CA)
(74) Representative: Rickard, David John

(57) **Abstract**

A method is provided for managing media for a wireless communications device having a memory with media files stored therein. The method comprises the steps of: retrieving information related to the media files stored in the memory of the wireless communications device that are protected; retrieving information related to the media files stored in the memory of the wireless communications device that are flagged; determining space available in the memory of the wireless communications device for replacement media files, the space available including space occupied by the flagged media files but not the protected media files; and generating a selection of replacement media based on the calculated space available on the wireless communications device, the selection of replacement media being chosen from available media stored external to the wireless communications device.

## Description

The present disclosure relates generally to portable devices, and more particularly to a system and method for managing media for a portable media device.

Users of media applications on personal computers and wireless devices are accustomed to using play lists organized by the media applications to organize collections of music files that they wish to listen to. Most portable devices have a fairly limited amount of memory available for storing media files. For this reason, some simpler wireless devices do not use play lists and simply offer a random selection of the content available on the wireless device. Therefore, it is desirable for a user of the portable device to regularly replace the memory contents of the portable device with other media files, usually stored on a desktop computer, so that the user is not always listening to the same collection of music. In this context, if the user wishes to maintain any control over the content of the memory of the portable device (i.e., which music files are available for listening at a given time), much time and effort is required in manually selecting which music files to copy to the portable device. This is a waste of time and uses unnecessary computing resources on wireless devices such as processing and battery power, as well as on the desktop computer.

Accordingly, it would be desirable to have a system and method for managing media for a portable media device that serves to provide a more user friendly interface for users of media applications, such that media content on the portable device can be quickly and efficiently managed, edited and/or added to. It would be desirable to have a system and method for managing media for a portable media device that continually refreshes the content available to the user in the portable device yet offers the user some control over the music selection that is available to him.

### GENERAL

In one embodiment a method may be provided for managing media for a wireless communications device having a memory with media files stored therein. The method may comprise the steps of: retrieving information related to the media files stored in the memory of the wireless communications device that are protected; retrieving information related to the media files stored in the memory of the wireless communications device that are flagged; determining space available in the memory of the wireless communications device for replacement media files, the space available including space occupied by the flagged media files but not the protected media files; and generating a selection of replacement media based on the calculated space available on the wireless communications device, the selection of replacement media being chosen from available media stored external to the wireless communications device.

In another embodiment, a system for managing media for a wireless communications device having media files stored in a memory therein may be provided. The system may include a computing device comprising: a microprocessor for controlling the operation of the computing device; a first input device coupled to the microprocessor for accepting an input from a user of the computing device; a display device coupled to the microprocessor for communicating an output to the user; a communications subsystem coupled to the microprocessor for communicating with a communications network; a memory coupled to the microprocessor; and a storage device coupled to the microprocessor. The system may include a media management module resident in the memory for execution by the microprocessor. The storage device may have media files stored thereon. The media management module may be configured to: retrieve information related to the media files stored in the memory of the wireless communications device that are protected; retrieve information related to the media files stored in the memory of the wireless communications device that are flagged; determine space available in the memory of wireless communications device for replacement media files, the space available including space occupied by the flagged media but not the protected media; generate a selection of replacement media based on the determined space available in the memory of the wireless communications device, the selection of replacement media chosen from media files stored on the storage device of the computing device; and copy the replacement media into the memory of the wireless communications device thereby replacing the flagged media.

### BRIEF DESCRIPTION OF THE DRAWINGS

Reference will now be made to the drawings, which show by way of example, embodiments of the present disclosure, and in which:

FIG. 1 shows in block diagram form a wireless device suitable for running a media application in accordance with one embodiment;

FIG. 2 shows in block diagram form a communication system suitable for providing the operating environment of the wireless device of FIG. 1 in accordance with one embodiment;

FIG. 3 shows in block diagram form the contents of a memory of the wireless device of FIG. 1;

FIG. 4 is a front view illustrating the wireless device of FIG. 1;

FIG. 5 shows a block diagram of an example computer system within which a wireless device management application can be implemented in accordance with one embodiment;

FIG. 6 is a flowchart illustrating a method of managing media for use with the management application in accordance with one embodiment; and

FIG. 7 is a flowchart illustrating a method of synchronization between a wireless device and a computer in accordance with one embodiment.

It will be noted that throughout the appended drawings, like features are identified by like reference numerals.

### DESCRIPTION OF PREFERRED EMBODIMENTS

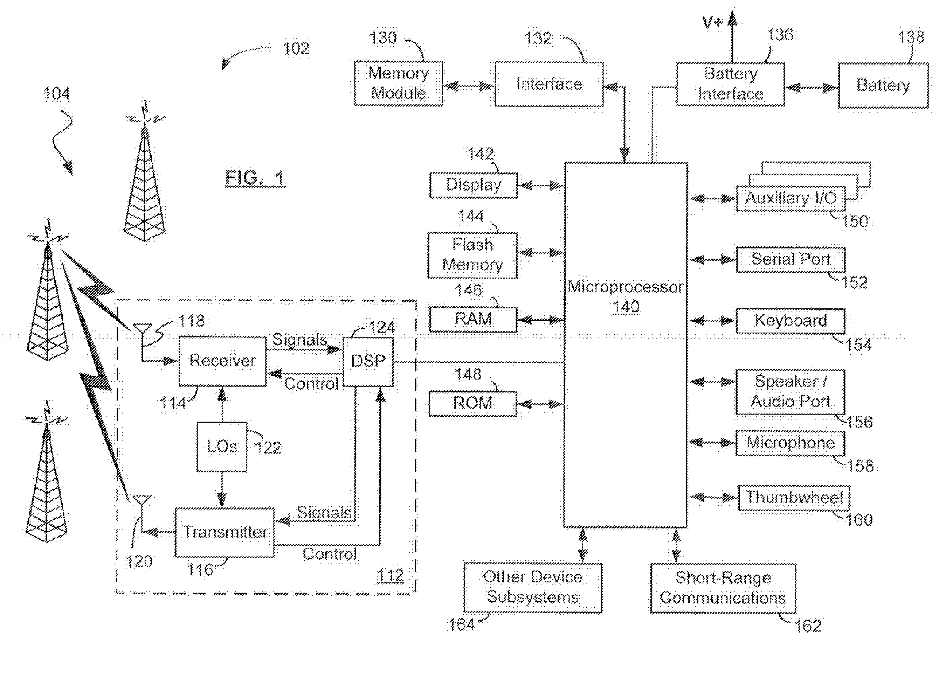

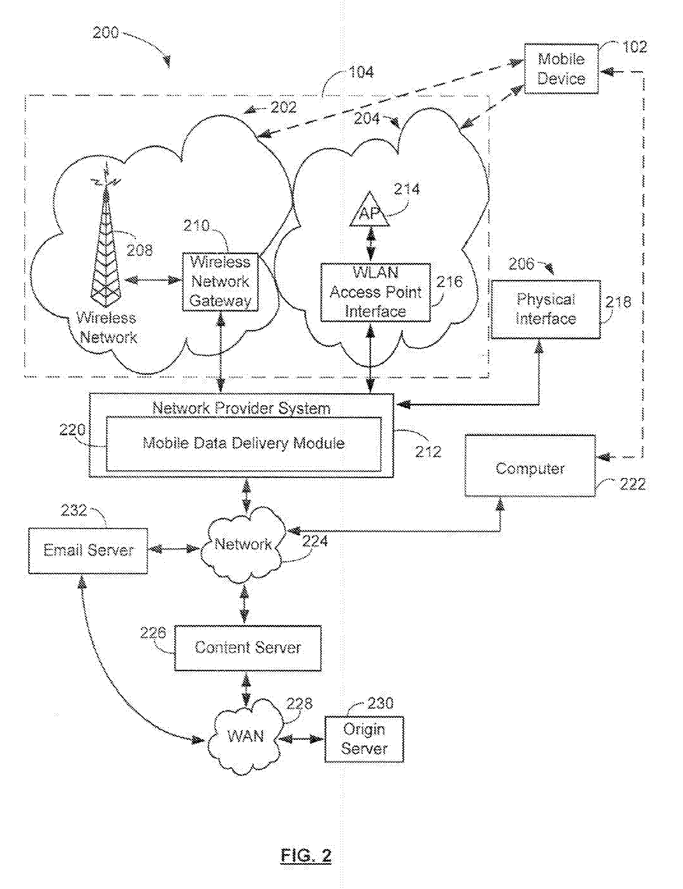

Reference is first made to FIG. 1, which shows a block diagram illustrating a portable wireless device 102 suitable for running a media player application in accordance with one embodiment of the present disclosure. The wireless device 102 communicates through a wireless communication network 104. The wireless network 104 includes antenna, base stations, and supporting radio equipment as for supporting wireless communications between the wireless device 102 and other devices connected to wireless network 104. The wireless network 104 may be coupled to a wireless network gateway and to a wide area network, shown in FIG. 2.

In one embodiment, the wireless device 102 is a two-way communication device having at least voice and data communication capabilities, including the capability to communicate with other computer systems. In one embodiment, the wireless device 102 is a handheld device. Depending on the functionality provided by the wireless device 102, it may be referred to as a data messaging device, a two-way pager, a cellular telephone with data messaging capabilities, a wireless Internet appliance, a data communication device (with or without telephony capabilities), or a portable media or music player. The wireless device 102 may communicate with any one of a plurality of fixed transceiver stations within its geographic coverage area.

The wireless device 102 may incorporate a communication subsystem 112, which includes a receiver 114, a transmitter 116, and associated components, such as one or more antenna elements 118 and 120, local oscillators (LOs) 122, and a processing module such as a digital signal processor (DSP) 124. In one embodiment, the antenna elements 118 and 120 may be embedded or internal to the wireless device 102. As will be apparent to those skilled in the field of communications, the particular design of the communication subsystem 112 depends on the wireless network 104 in which the wireless device 102 is intended to operate.

The wireless device 102 may send and receive communication signals over the wireless network 104 after the required network registration or activation procedures have been completed. Signals received by the antenna 118 through the wireless network 104 are input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 124. In a similar manner, signals to be transmitted are processed, including modulation and encoding, for example, by the DSP 124. These DSP-processed signals are input to the transmitter 116 for digital-to-analog (D/A) conversion, frequency up conversion, filtering, amplification, and transmission to the wireless network 104 via the antenna 120. The DSP 124 not only processes communication signals, but also provides for receiver and transmitter control. For example, the gains applied to communication signals in the receiver 114 and the transmitter 116 may be adaptively controlled through automatic gain control algorithms implemented in the DSP 124.

Network access is associated with a subscriber or user of the wireless device 102 via a memory module, such as a memory module 130, which may be a Subscriber Identity Module (SIM) card for use in a GSM network or a USIM card for use in a UMTS. The SIM card is inserted in or connected to an interface 132 of the wireless device 102 in order to operate in conjunction with the wireless network 104. Alternatively, the wireless device 102 may have an integrated identity module for use with systems such as Code Division Multiple Access (CDMA) systems.

The wireless device 102 also includes a battery interface 136 for receiving one or more rechargeable batteries 138. The battery 138 provides electrical power to at least some of the electrical circuitry in the wireless device 102, and the battery interface 136 provides a mechanical and electrical connection for the battery 138. The battery interface 136 is coupled to a regulator (not shown) which provides power V+ to the circuitry of the wireless device 102.

The wireless device 102 includes a microprocessor 140 which controls the overall operation of the wireless device 102. Communication functions, including at least data and voice communications, are performed through the communication subsystem 112. The microprocessor 140 also interacts with additional device subsystems such as a display 142, a flash memory 144, a random access memory (RAM) 146, a read-only memory (ROM) 148, auxiliary input/output (I/O) subsystems 150, a data port such as serial port 152, a keyboard or keypad 154, a speaker or audio port 156 for connecting to, for example a set of headphones, a microphone 158, a clickable thumbwheel or thumbwheel 160, a short-range communications subsystem 162, and any other device subsystems generally designated as 164. Some of the subsystems shown in FIG. 1 perform communication-related functions, whereas other subsystems may provide "resident" or on-device functions. Notably, some subsystems, such as the keypad 154, the display 142, and the clickable thumbwheel 160, for example, may be used for both communication-related functions, such as entering a text message for transmission over the wireless network 104, and executing device-resident functions such as a calculator or task list. Operating system software used by the microprocessor 140 is preferably stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

The microprocessor 140, in addition to its operating system functions, enables execution of software applications on the wireless device 102. A predetermined set of applications that control basic device operations, including data and voice communication applications, will normally be installed on the wireless device 102 during or after manufacture. The wireless device 102 may include a personal information manager (PIM) application having the ability to organize and manage data items relating to a user such as, but not limited to, instant messaging, email, calendar events, voice mails, appointments, and task items. The wireless device 102 may also include a media player application for playing media files such as video files (e.g., .VOB, .AVI, .WMV, or .MPG), audio files (e.g., .MP2, .MP3, .MP4, .AAC, .WAV), or any other type of media file known to those skilled in the art. Naturally, one or more memory stores are available on the wireless device 102 to facilitate storage of media file data items and other information, such as the flash memory 144, the RAM 146, the ROM 148, the memory module 130, or other types of memory storage devices or FLASH memory cards represented by the other device subsystems 164, such as Secure Digital (SD) cards or mini SD cards, etc.

The PIM and/or media applications have the ability to send and receive data items via either the wireless network 104 or a link to a computer system. The link to the computer system may be via the serial port 152 or the short-range communications subsystem 162. In one embodiment, PIM and/or media data items are seamlessly combined, synchronized, and updated via the wireless network 104, with the wireless device user's corresponding data items stored and/or associated with a host computer system thereby creating a mirrored or partially mirrored host computer on the wireless device 102 with respect to such items. This is advantageous where the host computer system is the wireless device user's office computer system. Additional applications may also be loaded onto the wireless device 102 through the wireless network 104, the auxiliary I/O subsystem 150, the serial port 152, the short-range communications subsystem 162, or any other suitable subsystem 164, and installed by a user in the RAM 146 or a nonvolatile store such as the ROM 148 for execution by the microprocessor 140. Such flexibility in application installation increases the functionality of the wireless device 102 and may provide enhanced on-device functions, communication-related functions, or both. For example, secure communication applications may enable electronic commerce functions and other such financial transactions to be performed using the wireless device 102.

In a data communication mode, a received data signal representing information such as a text message, an email message, a media file to be transferred, or Web page download will be processed by the communication subsystem 112 and input to the microprocessor 140. The microprocessor 140 will further process the signal for output to the display 142 or alternatively to the auxiliary I/O device 150. A user of the wireless device 102 may also compose data items, such as email messages, for example, using the keypad 154 and/or the clickable thumbwheel 160 in conjunction with the display 142 and possibly the auxiliary I/O device 150. The keypad 154 maybe either a complete alphanumeric keypad or telephone-type keypad. These composed items may be transmitted through the communication subsystem 112 over the wireless network 104 or via the short range communication subsystem 162.

For voice communications, the overall operation of the wireless device 102 is similar, except that the received signals would be output to the speaker or audio port 156 and signals for transmission would be generated by a transducer such as the microphone 158. Alternative voice or audio I/O subsystems, such as a voice message recording subsystem, may also be implemented on the wireless device 102. Although voice or audio signal output is typically accomplished primarily through the speaker or audio port 156, the display 142 may also be used to provide an indication of the identity of a calling party, duration of a voice call, or other voice call related information. Stereo headphones may also be used in place of the speaker 156.

The serial port 152 is normally implemented in a personal digital assistant (PDA) type communication device for which synchronization with a user's computer is a desirable, albeit optional, component. The serial port 152 enables a user to set preferences through an external device or software application and extends the capabilities of the wireless device 102 by providing for information, media file, or software downloads to the wireless device 102 other than through the wireless network 104. The alternate download path may, for example, be used to load media files onto the wireless device 102 through a direct, reliable and trusted connection to thereby provide the user of the device 102 with media files to view and/or listen to using a media application of the device 102.

The short-range communications subsystem 162 is an additional optional component which provides for communication between the wireless device 102 and different systems or devices, which need not necessarily be similar devices. For example, the subsystem 162 may include an infrared device and associated circuits and components, or a wireless bus protocol compliant communication mechanism such as a Bluetooth^{™} communication module to provide for communication with similarly-enabled systems and devices (Bluetooth^{™} is a registered trademark of Bluetooth SIG, Inc.). In another embodiment, the short-range communications subsystem 162 may be a wireless networking communications subsystem, conforming to IEEE 802.11 standards such as 802.11b and/or 802.11g.

Reference is next made to FIG. 2, which shows a communication system 200 suitable for use with the wireless device 102 shown in FIG. 1. The communication system 200 generally includes one or more wireless devices 102 (only one of which is shown in FIG. 2) and the wireless network 104. The wireless network 104 may include a wireless Wide Area Network (WAN) 202, a Wireless Local Area Network (WLAN) 204, and/or other interfaces 206 (which may not necessarily be wireless).

Referring to FIG. 2, the wireless WAN 202 may be implemented as a packet-based cellular or mobile network that includes a number of base stations 208 (one of which is shown in FIG. 2) where each of the base stations 208 provides wireless Radio Frequency (RF) coverage to a corresponding area or cell. The wireless WAN 202 is typically operated by a cellular network service provider that sells subscription packages to users of the wireless devices 102. The wireless WAN 202 comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), or Evolution-Data Optimized (EV-DO).

As shown in FIG. 2, the communications system 200 also includes a wireless network gateway 210 and one or more network provider systems 212. The wireless network gateway 210 provides translation and routing services between the network provider system(s) 212 and the WAN 202, which facilitates communication between the wireless devices 102 and other devices (not shown) connected, directly or indirectly, to the network provider system 212.

The WLAN 204 comprises a network which in some examples conforms to IEEE 802.11 standards such as 802.11b and/or 802.11g; however, other communications protocols may also be used for the WLAN 204. The WLAN 204 includes one or more wireless RF Access Points (AP) 214 (one of which is shown in FIG. 2) that collectively provide a WLAN coverage area. For the embodiment depicted in FIG. 2, the WLAN 204 is operated by an enterprise (for example, a business or university in a building or campus type environment) and the access points 214 are connected to an access point (AP) interface 216. The AP interface 216 provides translation and routing services between the access points 214 and the network provider system 212 to facilitate communication between two or more of the wireless devices 102 and other devices (e.g., such as desktop computers) connected, directly or indirectly, to the network provider system 212. The AP interface 216 is implemented using a computer, for example, a server running a suitable computer program or software.

According to one embodiment, the other interfaces 206 may be implemented using a physical interface indicated by reference 218. The physical interface 218 includes an Ethernet, Universal Serial Bus (USB), Firewire, or infrared (IR) connection implemented to exchange information between the network provider system 212 and the wireless device 102.

The network provider system 212 comprises a server or server modules or a number of servers or server modules which are typically located behind a firewall (not shown). The network provider system 212 may include a number of modules including a mobile data delivery module 220. Various modules running on the network provider system 212 may be implemented as a number of services running on a single server or as a number of interconnected servers each running a software program to implement the functionality of the respective module. The network provider system 212 provides access for the wireless devices 102, through either the wireless WAN 202, the WLAN 204, or the other connection 206 to the devices connected, for example, through an enterprise network 224 (e.g., an intranet), to the network provider system 212. In one embodiment, the data delivery module 220 is implemented on a computer, such as the network provider system 212.

The enterprise network 224 comprises a local area network, an intranet, the Internet, a direct connection, or combinations thereof. The enterprise network 224 may comprise an intranet for a corporation or other type of organization. In at least some embodiments, the network provider system 212 is part of the enterprise network 224, and is located behind a corporate firewall and connected to the wireless network gateway 210 through the Internet. A computer 222 (e.g., a desktop or laptop computer) belonging to the user of the wireless device 102 is typically connected to the enterprise network 224. As described earlier, the wireless device 102 can be temporarily and directly connected to the computer 222 using, for example, the serial port 152. Alternatively, the wireless device 102 may communicate with the computer 222 using the communication subsystem 112 and the WAN 202 and/or the short-range communications subsystem 162 and the WLAN 204.

As shown in FIG. 2, an application/content server 226 may be connected to the enterprise network 224 and also to another network, for example a Wide Area Network (WAN) 228. In some embodiments, an email server 232 and/or the content server 226 form part of the enterprise network 224. The WAN 228 may further connect to other networks. The WAN 228 may comprise or be configured with the Internet, a direct connection, a LAN, a wireless communication link, or any combination thereof. Content providers, such as Web servers, may be connected to the WAN 228, an example of which is shown in FIG. 2 as an origin server 230.

According to one embodiment, the mobile data delivery module 220 provides connectivity between the wireless WAN 202 and the WLAN 204 and the other connection 206 and devices and/or networks connected directly or indirectly to the network provider system 212. In one embodiment, the connectivity provided may be Hypertext Transfer Protocol (HTTP) based connectivity providing an Internet based service connection to devices connected to the wireless WAN 202, the WLAN 204, or the other connection 206 and devices and/or networks connected directly or indirectly to the network provider system 212. The network 224, the application/content server 226, the WAN 228, and the origin server 230, are individually and/or collectively in various combinations a content source for the network provider system 212. It will be appreciated that the system shown in FIG. 2 comprises but one possible communication network or configuration of a multitude of possible configurations for use with the wireless devices 102.

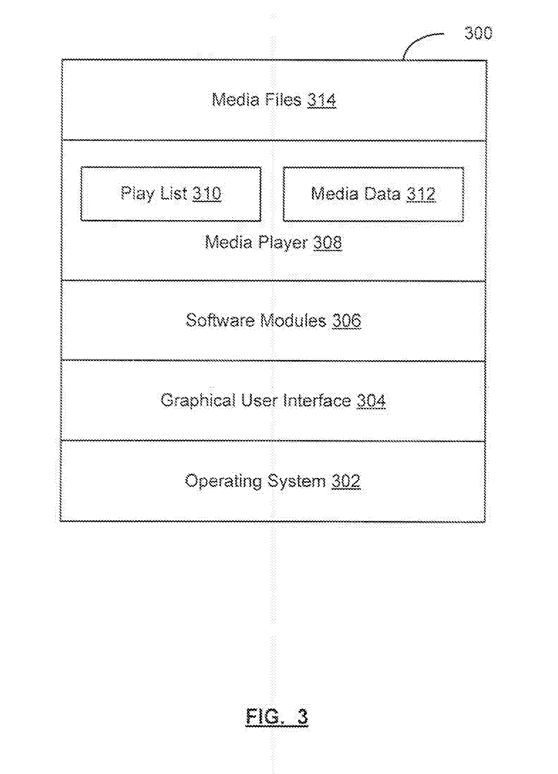

Reference is next made to FIG. 3, which shows a block diagram illustrating a memory 300 of the wireless device 102. The memory 300 has various software components for controlling the wireless device 102 and may include, for example, the flash memory 144, the RAM 146, the ROM 148, the memory module 130 and/or the other device subsystems 164. In accordance with one embodiment, the wireless device 102 is a portable media player intended to allow the user to listen to audio files and/or watch video files on the go. In accordance with another embodiment, the wireless device 102 is intended to be a multi-tasking wireless communications device configured for sending and receiving data items and for making and receiving voice calls that also includes a media player application enabling the user to listen to music and/or watch video files on the go. To provide a user-friendly environment to control the operation of the wireless device 102, an operating system (OS) 302 resident on the wireless device 102 provides a basic set of operations for supporting various applications typically operable through a graphical user interface (GUI) 304. For example, the operating system 302 provides basic input/output system features to obtain input from the auxiliary I/O 150, the keypad 154, the clickable thumbwheel 160, and other input devices, and to facilitate output to the user via the display 142. The GUI 304 is typically a component of the operating system 302. One or more software modules 306 for managing communications or providing a personal digital assistant (PDA) or other functions may also be included. The memory 300 also includes an email and calendar client, which may be combined in, for example, a PIM application having email-based calendaring and scheduling functions. Typically, the PIM is installed as one of the software modules 306. The memory 300 also includes a media player application 308 for playing media files 314 that are stored in the memory 300. Typically, the media files 314 would be stored in the flash memory 144, but may be stored in any of the memory devices associated with the memory 300. The media player application 308 may further maintain in the memory 300 one or more play lists 310 and media data 312. In one embodiment, the play lists 310 are used by the media player application 308 to manage the playing of media selected from the media files 314, stored locally on the wireless device 102. In one embodiment, the media data 312 includes a list of media that is among the media stored as the media files 314 identifying some of the media files 314 as protected (i.e., not to be deleted or replaced). Media may be available from an external source, for example media stored on the user's computer 222, that may be selected for copying to the wireless device 102 and for adding to and/or replacing the media files 314. The selection of available media from the computer 222 may also be stored as the media data 312. The media data 312 may also include records about how many times the media files 314 have been played. This process of adding to and/or replacing the media files 314 based on the selection of available media from the personal computer 222 may be managed by either the media player application 308 on the wireless device 102 or a media management application running on the personal computer 222 and will be described in more detail below.

Thus, the wireless device 102 includes computer executable programmed instructions for directing the wireless device 102 to implement various applications. The programmed instructions may be embodied in the one or more software modules 306 resident in the memory 300 of the wireless device 102. Alternatively, the programmed instructions may be tangibly embodied on a computer readable medium (such as a DVD, CD, floppy disk or other storage media) which may be used for transporting the programmed instructions to the memory 300 of the wireless device 102. Alternatively, the programmed instructions may be embedded in a computer-readable, signal-bearing medium that is uploaded to the wireless network 104 by a vendor or supplier of the programmed instructions, and this signal-bearing medium may be downloaded through one or more of the interfaces 112, 150, 152, 162 to the wireless device 102 from, for example, the wireless network 104 by end users.

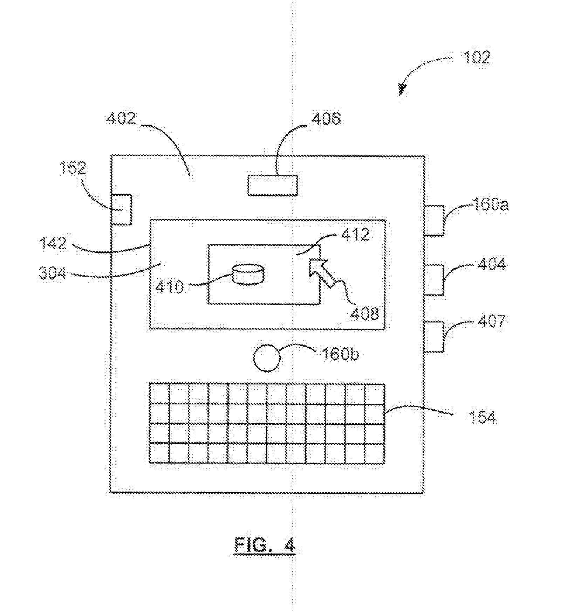

Reference is next made to FIG. 4, which shows a front view of the wireless device 102. As mentioned above, the wireless device 102 may be a data and voice-enabled handheld device. The wireless device 102 includes a casing 402, the data or serial port 152, the display screen 142, the graphical user interface (GUI) 304, the keypad 154, the clickable thumbwheel 160a or other device for navigation such as a trackball 160b, one or more input buttons 404 (e.g., select, cancel, talk, play, stop, fast forward, rewind, next, previous buttons), signal inputs/outputs 406 (e.g., power connector input, microphone, speaker, data interface input, etc.), and an audio port 407. Internally, the wireless device 102 includes one or more circuit boards (not shown), the microprocessor 140 (FIG. 1), the memory 300 (FIG. 3), the battery 138 (FIG. 1), the antennae 118, 120 (FIG. 1), etc., which may all be coupled to the signal inputs/outputs 406, the keypad 154, the display screen 142, the clickable thumbwheel 160, etc.

The microprocessor 140 is typically coupled to one or more input devices (e.g., the buttons 404, the keypad 154, the clickable thumbwheel 160) for receiving user commands or queries and the display 142 for displaying the results of these commands or queries. For example, user queries may be transformed into a combination of commands for producing one or more tables of output data which may be incorporated in one or more display pages for presentation to the user. The microprocessor 140 is also coupled to the memory 300. The microprocessor 140 is typically coupled to a set of stereo headphones connected to either the audio port 407 or connected via a Bluetooth connection when the user wishes to use the media player application 308 to listen to audio files or watch video files.

A user may interact with the wireless device 102 and its software modules 306 and the media player module 308 using the GUI 304. The GUI 304 is controlled by the operating system 302 (FIG. 3) and provides a display format enabling the user to choose commands, execute application programs, manage computer files, and perform other functions by selecting pictorial representations (i.e., icons), or selecting items from a menu through the use of an input or pointing device such as the clickable thumbwheel 160 and/or the keypad 154. Generally, the GUI 304 is used to convey information and receive commands from users and generally includes a variety of GUI objects or controls including icons, toolbars, drop-down menus, pop-up menus, text, dialog boxes, buttons, etc. A user typically interacts with the GUI 304 presented on the display 142 by using an input or pointing device to position a pointer or cursor 408 over an object 410 (i.e., "pointing" at the object) and by "clicking" on the object 410 (e.g., by depressing the thumbwheel 160 or a button on the keyboard 154, etc.). This is often referred to as a point-and-click or selection operation. Typically, the object 410 may be highlighted (e.g., shaded) when it is selected or pointed at by the pointer or cursor 408 to indicate that the object 410 is selectable.

Typically, a GUI-based system presents application, status, and other information to the user in windows appearing on the display 142. A window 412 is a display area shown within the display 142, typically rectangular, in which a user may view an application or document. The window 412 may be open, closed, displayed full screen, reduced to an icon, increased or reduced in size, or moved to different areas of the display 142. Multiple windows 412 may be displayed simultaneously. For example, the windows 412 may be displayed within other windows, overlapped with other windows, or tiled within the display area.

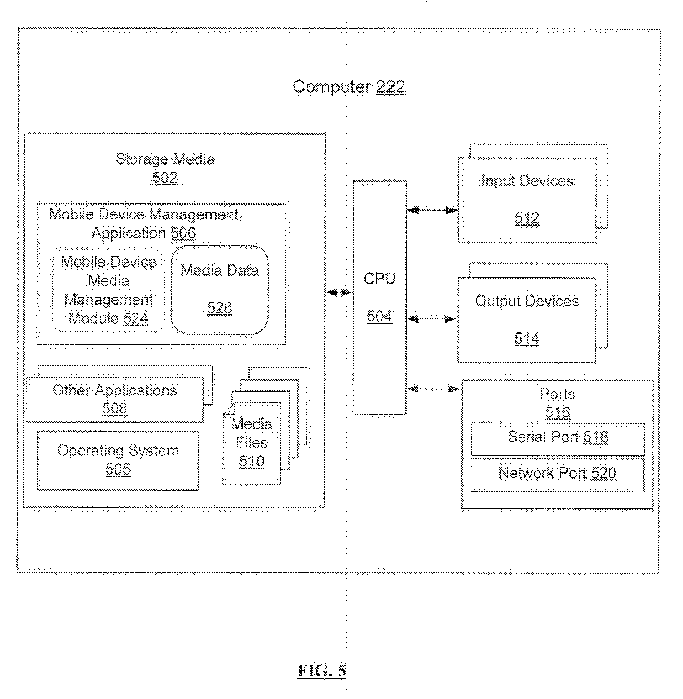

Reference is next made to FIG. 5, which is a block diagram illustrating an example of the computer 222, which includes one or more storage media 502 in communication with a central processing unit (CPU) 504. Although the storage media 502 is typically one or more hard-disk drives, the storage media 502 could additionally or alternatively include DVD media, CD media, flash memory, diskettes, RAM and/or other types of media. In some embodiments, various types of software are stored on the media 502 including an operating system 505, a mobile device management application 506 and other applications 508. Also stored on the media 502 are media files 510 and media data 526.

The computer 222 further includes one or more input devices 512, one or more output devices 514, and one or more communications subsystems or ports 516 in communication with the CPU 504. Examples of possible input devices include a mouse, keyboard, scanner, microphone, etc. Many of the input devices 512 may not be housed within the computer 222, but may instead provide input through one of the externally exposed ports 516. Examples of the possible output devices 514 include a monitor, a printer, speakers, etc. Many of the output devices 514 may not be housed within the computer 222 and, as such, output signals from the CPU 504 to one of the devices 514 may be transmitted through one of the ports 516. As will be appreciated by those skilled in the art, it is also possible that one or more of the devices 512 and 514 may be a device that is more accurately described as both an input and output device. In an example embodiment, the ports 516 include a serial port 518, such as a USB port, for example for supporting a wired connection to the serial port 152 of the wireless device 102 (FIG. 1) connected either directly or indirectly through a docking station (not shown). In one embodiment, the ports 516 also include a network port 520 for connecting to the network 224 (FIG. 2). The port 520 may comprise an Ethernet 10/100/1000 connector and/or a WLAN communications sub-system. A short-range wireless communications port or antenna may be included for supporting direct wireless communications such as 802.11b/g wireless networking, Bluetooth^{™}, or infrared communications with either the wireless device 102 or the wireless network 104.

As indicated above, among the software applications on the computer 222 is a mobile device management application 506 (or suite of applications) which includes computer instructions that are executable by the CPU 504 of the computer 222 to implement, among other things, a portable device media management module 524 that facilitates, as described in greater detail below, the management of and transfer of media files from the computer 222 to the wireless device 102 that is associated with the computer 222. By way of example, the computer 222 and the wireless device 102 may be associated through a common user who has an assigned domain login ID and email account within the system 200. The wireless device 102 may be associated with the user domain ID and email account during activation.
When a user logs onto a particular computer 222 using the domain login ID, both the computer 222 and the wireless device 102 are commonly associated with the user and hence each other. Association of the wireless device 102 with the computer 222 could also occur through other means, for example, when a user originally activates the wireless device 102, the wireless device 102 and the computer 222 may exchange IDs and or addresses by being plugged directly together through a serial connection. In another example, the device may, upon activation, search for other devices through the short-range communications system 162 and present the user with a list of devices to "pair" with; the wireless device 102 and the selected device (e.g., the computer 222) then authenticate each other via a password exchange, and, once paired, the associated devices remember the pairing and password so that future linking between the device is automatically performed.

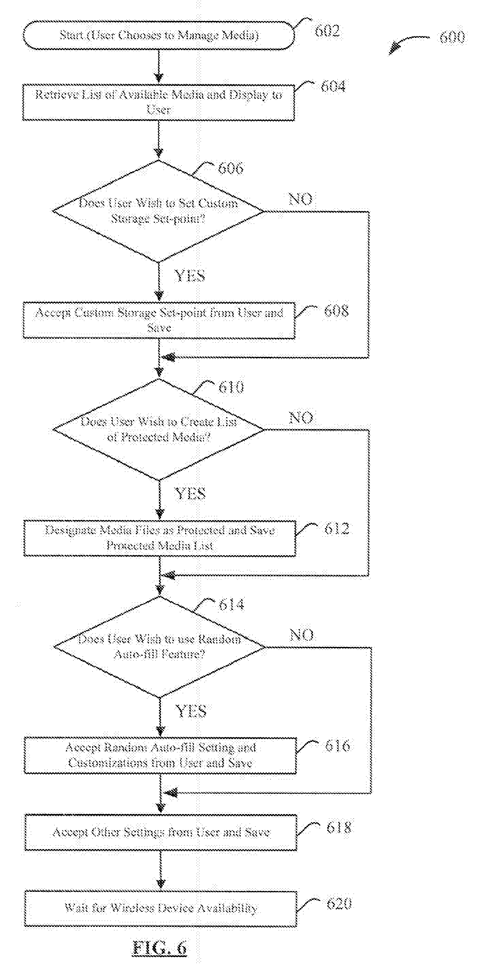

Reference is next made to FIG. 6, which shows a flowchart illustrating a method 600 of managing media according to one embodiment. According to the present embodiment, a user of the wireless device 102 and the computer 222 loads the mobile device management application 506 and chooses to manage media by initializing the mobile device media management module 524. This procedure is represented by the initial step 602 of the method 600. While the media management module 524 is shown to be part of the media management application 506, in another embodiment, the mobile device media management module 524 may be a separate piece of software from the mobile device management application 506. In other embodiments, the method 600 may be implemented by the media player application 308 on wireless device 102.

Next, at a step 604, the media management module 524 retrieves a list of available media, such as information from the media files 510 and displays this information to the user. In one example, the available media information is song information, which is typically compiled by extracting the information from the available media files, for example from ID3 tags (i.e., either ID3v1 or ID3v2) in .MP3 files, APEv2, or other standards for storing metadata within the media files 510. The media management module 524 uses this information as a tool for presenting the user with information about the available media files 510, such as by showing the user a list of artist, album, and song information related to the available media files 510 and organizing the list in an easy to understand and easy to navigate fashion based on this metadata. This information assists the user in selecting which of the media files 510 he wishes to have copied to the wireless device 102 to be included in the media files 314. In another example, video files may be organized according to other criteria, such as by leading actor, date of release, type of movie (action, drama, etc.), etc.

Next, at a step 606, the media management module 524 presents the user with an option to set a custom storage set-point. The purpose of the custom storage set-point may be to set a maximum amount of the memory 300 that will be allocated to storing the media files 314 that are available to the user of the wireless device 102. In another example, the purpose of the custom storage set-point may be to allocate a maximum portion of the memory 300 to additional songs to be randomly chosen. Typically, the media files 314 are stored in the flash memory 144 and/or removable memory such as the memory module 130. For example, a user may have 2 Gigabytes of available memory in a removable memory card such as an SD card or mini SD card, which has become an industry standard for removable FLASH memory used on portable devices. The user may wish to allocate only 1GB of memory to the media files 314 and reserve the other available 1GB for taking photos with the wireless device 102, or any other possible storage purpose. Therefore, at a step 608, the user would set the custom storage set-point at 1GB, which may include specifying that the 1GB of storage space allocated to storing the media files 314 is to be used, for example in an inserted 2GB mini SD FLASH card. In a second example, a user may have 2 Gigabytes of available memory in a removable memory card such as an SD card or mini SD card. The user may wish to allocate 1GB of memory to media files 314 that are not protected (to be explained in more detail below) and reserve the other available 1GB for protected media, taking photos with the wireless device 102, or any other possible storage purpose. Therefore, at a step 608, the user would set the custom storage set-point at 1GB, which may include specifying that the 1GB of storage space allocated to storing unprotected media files is to be used, for example in an inserted 2GB mini SD FLASH card. This information may be saved on the computer 222 as part of the media data 526. Alternatively, where the method 600 is occurring on the wireless device 102, this information may be saved as the media data 312. If the user had chosen not to create the custom storage set-point at the step 606, the method 600 proceeds directly to a step 610. In one embodiment, if the user chooses not to create the custom storage set-point, the media management module 524 may set a custom storage set-point such as, for example, 75% of the available memory 300.

Next, at the step 610, the media management module 524 presents the user with an option to create a list of protected media. Media files which appear on the list of protected media will be copied to the wireless device 102 to be included in the media files 314 and will remain as part of the media files 314 until such time that the user decides to remove those media files from the protected media list. Therefore, a user would typically add files to the protected media list which represent his favourite music selections that he wishes to always have available on the wireless device 102. At a step 612, the information related to the media files that the user has designated as being protected is accepted from the user and stored on the computer 222 as the media data 526. Alternatively, where the method 600 is occurring on the wireless device 102, this information may be saved as the media data 312. The amount of media that the user can designate as protected is limited only by the available storage space 300 on the wireless device 102. If the user had chosen not to create a list of protected media at the step 610, the method 600 proceeds directly to a step 614.

Next, at the step 614, the media management module 524 presents the user with an option to use a random auto-fill feature. The purpose of the random auto-fill feature is to fill-up the size or space allocated for the randomly selected or pseudo-randomly selected media files 314 as defined by the custom storage set-point defined at the step 608. For example, the user may set the custom storage set-point to be 1GB (i.e, of the 2GB memory card, as previously mentioned) and may define 400MB of the media files 510 as being protected. Therefore, the 1GB custom storage set-point remains and is available to be filled up, resulting in a total storage space of 1.4GB for the media files 314. If the user chooses to enable the random auto-fill feature, the media management module 524 fills the remaining 1GB, as defined by the custom storage set-point, with a random selection of the media files 510 that have not been designated as protected.

In one embodiment, countless additional options may be defined in conjunction with the selection of the auto-fill option, such as whether all of the media files 510 not designated as protected are available to the auto-fill selection or whether only media files belonging to a certain genre (e.g., certain artist(s), album(s), or custom defined groups in the example of audio files) are available to the auto-fill feature for random selection. In another example, the 1GB of unprotected space, as defined by the custom storage set-point, may be manually filled based on user preference (e.g., the user wishes to only listen to media of a particular artist this week). In yet another example, the user may be able to set a time-frame related to when media will be available again for listening/and or viewing after a previous listening and/or viewing experience (e.g., if songs of a particular artist were randomly selected for listening this week, that particular artist and/or songs may not be selected next week). Additionally, certain media files within the media files 510 may be flagged as not available for selection by the auto-fill feature, such as media files being less than a certain play length (i.e., playing time) or size or more than a certain length or size. At a step 616, all of these settings and customizations are accepted from the user and saved on the computer 222 as part of the media data 526. Alternatively, where the method 600 is occurring on the wireless device 102, this information may be saved as the media data 312. If the user had chosen not to select the random auto-fill feature or set other customization options at the step 614, the method 600 proceeds directly to a step 618.

Next, at a step 618, the media management module 524 accepts any other settings from the user. For example, if the user had chosen not to use the auto-fill feature at the step 614, the user may be able to select additional content from the media files 510 to be included with the list of protected files selected at the step 610. Any additional settings are saved as part of the media data 526. Again, where the method 600 is occurring on the wireless device 102, this information may be saved as the media data 312.

Finally, at a step 620, the media management module 524 waits for the wireless device 102 to be available so that the wireless device 102 can be updated or synchronized with the computer 222.

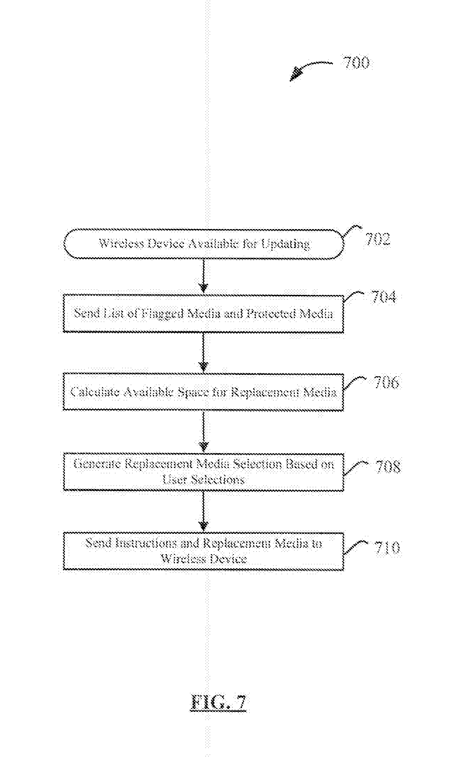

Referring to FIG. 7, a flowchart is shown illustrating a method of synchronization 700 between the wireless device 102 and the computer 222 in accordance with one embodiment. The method 700 shows only a media portion of a synchronization that occurs between the wireless device 102 and the computer 222. It will be understood by those skilled in the art that synchronizations between a wireless device and a computer also include many other aspects of data transfer, such as email exchange, PIM data exchange, etc, and that the media portion is only one aspect of such a synchonization.
In a first step 702, the wireless device 102 becomes available for updating. This may occur in a number of ways. Typically, the wireless device 102 is available for updating when connected to the computer 222 via the serial ports 152 and 518 with a serial cable. This connection may occur, for example, when the user places the wireless device 102 in a cradle connected to the serial port 518 of the computer 222. Alternatively, the wireless device 102 may be available for updating via the wireless WAN 202 and the communication subsystem 112 or via the WLAN 214 and the short-range communications subsystem 162. The wireless device 102 may access the computer 222 using these wireless communications subsystems through the network 224 that the computer 222 is connected to. Such wireless communications with the computer 222 may occur either at predetermined times or on demand, for example when the user has completed the method 600 shown in FIG. 6. Typically, the wireless device 102 would be resting in the cradle connected to the computer 222 when the method 600 is completed (i.e., when completed locally), and the synchronization method 700 is launched next. Additionally, the method 700 is typically initiated as soon as the wireless device 102 has been connected to the computer 222 and any pairing process has been completed, resulting in the availability of the wireless device 102 (step 702).

Next at a step 704, the wireless device 102 sends a list of flagged media as well as a list of protected media to the computer 222. Alternatively, this information may already be on the computer 222 and the step 704 may occur locally. If the wireless device 102 has not been through the synchronization process 700 before, there will be nothing for the wireless device 102 to send to the computer 222 at this point. The media files 314 stored in the memory 300 of the wireless device 102 are used as source material by the media player 308 when the user listens to or views the media contained within the media files 314. After a file contained within the media files 314 has been played a predetermined number of times, the media player 308 flags the media file as having been played. In one example, this may occur after the user has heard and/or viewed a particular media file once, but this may be set to any number of viewings/listenings before the media file becomes flagged. Data related to which of the media files 304 are flagged is stored as part of the media data 312. The flagging of the media files 314 serves as an indication to the media management module 524 on the computer 222 that the flagged media files are ready to be replaced by a random selection from the media files 510. Further, as an optional feature, the media data 312 on the wireless device 102 may include a copy of the protected media list (i.e., as defined at the step 612 of the process 600), which is copied from the media data 526 of the computer 222 to the media data 312 of the wireless device 102 during the synchronization process 700. The media player 308 may include an option for the user to designate or undesignate media files as protected or unprotected while viewing/listening to those media files using the media player 308. Any updates made to the protected media list stored in the media data 312 on the wireless device 102 are transferred to the media data 526 on the computer 222 during the step 704, along with the information concerning which of the media files 314 are flagged.

Next, at a step 706, the media management module 524 of the computer 222 calculates the available space for replacement media to be sent to the memory 300 of the wireless device 102. Replacement media is intended to replace flagged items within the media files 314 in order to keep a fresh selection of media available to the user. In one example, this calculation simply involves retrieving the size of the custom-storage set-point allocated to the unprotected space in the memory 300 and subtracting the space used by unflagged media files. In other words or alternatively, the space defined by the custom storage set-point is to be used by replacement media to be sent to the wireless device 102 during synchronization, with only flagged media files being replaced.

In an alternative embodiment where the custom-storage set-point includes the protected media space, this calculation simply involves taking the custom storage set-point (e.g., 1GB) and subtracting the storage space occupied by the protected media files (i.e., as defined by either the media data 526 or, alternatively, the updated media data 312 sent to the media management module 524 in the step 704) and further subtracting the storage space occupied by the unflagged media files 314, as defined by the media data 312 sent to the media management module in the step 704.

Next, at a step 708, the media management module 524 generates a replacement media selection, based on the user selections made during the process 600. Typically, this will involve using the random auto-fill feature to randomly select songs from the media files 510 that are not already included in the media files 314 as either the protected media files or the unflagged media files. Additionally, the random auto-fill feature will not select any of the flagged media files since this would simply replace the flagged media files 314 with some of the same files. Some situations may exist where the media management module 524 may select files from the media files 510 to replace the flagged media files 314 that are the same as some of the flagged media files 314, such as where the selection of media files 510 is not large enough to guarantee an entirely new selection of music or where the user has opted to allow such a condition to occur, even where the selection of the media files 510 is large enough. Additionally, the user selections made during the process 600 may serve as a basis for preference determination during the replacement media selection. For example, in the case of music files, if the user's protected list contains a large selection of songs from a particular artist, the module 524 may pseudo-randomly select more selections from the same artist during the replacement media selection.

Finally, at a step 710, the media management module 524 of the personal computer 222 completes the synchronization process 700 by sending to the wireless device 102 copies of the media files 510 that have been selected to replace the flagged media files 314, as well as any new replacement media data from the media data 526 that is to be saved as the media data 312. The replacement media data includes resetting any flags of all media sent to the wireless device 102 that may exist in the media data 312, as well as any new media data that was defined using the computer 222, such as any new protected media file selections. While the steps 704, 706, and 708 are described as occurring on the computer 222, those skilled in the art will appreciate that the steps 704, 706, and 708 could instead occur on the wireless device 102.

Those skilled in the art will appreciate that the methods 600 and 700 result in a mode of operation where the user of the wireless device 102 has a selection of media files 314 stored which represents a subset of the available media files 510. A list of protected media files exists within the media data 312 and 526 that represents the users favourite or preferred songs, which are to remain in the memory 300 at all times. As the user views/listens to the selection of media files 314, media files are flagged after a number of predetermined viewings/listenings. When the user next connects the wireless device 102 to the computer 222 for synchronization, songs which are flagged and are not protected are replaced, typically with a random selection of new media files from the media files 510.

While the steps of the methods 600 and 700 are shown as occurring in a particular order, it will be appreciated by those skilled in the art that many of the steps are interchangeable and may occur in different orders than that shown without materially affecting the end results of the methods 600 and 700. Additionally, while the management of the media files 510 and 314 is described as principally occurring within the mobile device management application 506, it will be understood by those skilled in the art that a similar module to the mobile device media management module 524 may be implemented as one of the software modules 306 on the wireless device 102.

While the present disclosure is primarily described as a method, a person of ordinary skill in the art will understand that the present disclosure is also directed to an apparatus for carrying out the disclosed method and including apparatus parts for performing each described method step, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the disclosed method. It is understood that such apparatus, articles of manufacture, and computer data signals also come within the scope of the present disclosure.

The embodiments of the present disclosure described above are intended to be examples only. Those of skill in the art may effect alterations, modifications and variations to the particular embodiments without departing from the intended scope of the present disclosure. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A method for managing media for a wireless communications device (102) having a memory (300) with media files (314) stored therein, the method comprising the steps of:
retrieving information related to the media files (314) stored in the memory (300) of the wireless communications device (102) that are protected;
retrieving information related to the media files (314) stored in the memory (300) of the wireless communications device (102) that are flagged;
determining space available in the memory (300) of the wireless communications device (102) for replacement media files, the space available comprising space occupied by the flagged media but not the protected media; and
generating a selection of replacement media based on the determined space available in the memory (300) of the wireless communications device (102), the selection of replacement media being chosen from available media stored external to the wireless communications device (102).

2. The method according to claim 1, further comprising the step of:
copying the replacement media into the memory (300) of the wireless communications device (102) thereby replacing the or some of the flagged media.

3. The method according to claim 1 or claim 2, wherein the available media stored external to the wireless communications device (102) is stored on a storage device (502) of a computer (222) and the method for managing media for the wireless communications device (102) is executed by a media management module (524) running on the computer (222).

4. The method according to claim 3, wherein the information related to the media files (314) stored in the memory (300) of the wireless communications device (102) that are protected is retrieved from the storage device (502) on the computer (222) or from the wireless communications device (102) and the information related to the media files (314) stored in the memory (300) of the wireless communications device (102) that are flagged is retrieved from the wireless communications device (102).

5. The method according to any one of claims 1 to 4, wherein the step of determining space available in the memory (300) of the wireless communications device (102) for replacement media files is performed in respect of a maximum allocated storage space on the wireless communications device (102), the maximum allocated storage space defined by a user defined storage set-point that is saved on the storage device (502) of the computer (222).

6. The method according to any one of claims 1 to 5, wherein the step of generating a selection of replacement media based on the determined space available in the memory (300) of the wireless communications device (102) comprises randomly selecting replacement media from the available media stored external to the wireless communications device (102).

7. The method according to claim 6 wherein the random selection excludes media files already stored in the memory (300) of the wireless communications device (102).

8. The method according to any one of claims 1 to 7, wherein the media stored in the memory (300) of the wireless communications device (102) is selected from any of audio, video, and/or game files and the media that is flagged is selected from any of audio, video, and/or game files that have been viewed/listened to since the files were copied to the wireless communications device (102).

9. The method according to claim 3 or claim 4 or any one of claims 5 to 8 when dependent on claim 3, wherein the step of copying the replacement media into the memory (300) of the wireless communications device (102) occurs via a serial link between the wireless communications device (102) and the computer (222).

10. The method according to claim 3 or claim 4 or any one of claims 5 to 8 when dependent on claim 3, wherein the step of copying the replacement media into the memory (300) of the wireless communications device (102) occurs via a network link between the wireless communications device (102) and the computer (222).

11. A system for managing media for a wireless communications device (102) having media files (314) stored in a memory (300) therein, the system comprising a computing device (222) comprising:
a microprocessor (504) for controlling the operation of the computing device (222);
a first input device (512) coupled to the microprocessor (504) for accepting an input from a user of the computing device (222);
a display device coupled to the microprocessor (504) for communicating an output to the user;
a communications subsystem (516) coupled to the microprocessor (504) for communicating with a communications network;
a memory coupled to the microprocessor (504); and
a storage device (502) coupled to the microprocessor (504),
the system comprising a media management module (524) resident in the memory for execution by the microprocessor (504), the storage device (502) having media files (510) stored thereon, the media management module (524) being configured to cause said computing device to perform the method of any one of claims 1 to 10.

12. A computer readable medium storing program instructions for a computing device for causing said computing device to perform the method of any one of claims 1 to 10.

13. A wireless communications network comprising the system according to claim 11 and a plurality of wireless communications devices (102) capable of communicating with said system.
